# EUROPEAN PATENT APPLICATION

(11) **EP 2 773 113 A1**
(43) Date of publication of application: **03.09.2014**
(21) Application number: 12844021.1
(22) Date of filing: 17.10.2012
(51) Int. Cl.: H04N 7/32

(54) **ENCODING SYSTEM AND ENCODING METHOD FOR VIDEO SIGNALS**

(30) Priority: 24.10.2011 JP 2011232863
(71) Applicant: Gnzo Inc., Kanagawa 258-0015 (JP)
(72) Inventor: KASAI, Hiroyuki, Chofu-shi Tokyo 182-8585 (JP); UCHIHARA, Naofumi, Chofu-shi Tokyo 182-8585 (JP)
(74) Representative: Piotrowicz, Pawel Jan Andrzej
(86) International application number: PCT/JP2012/076813
(87) International publication number: WO 2013/061839

(57) **Abstract**

There is provided technology that can generate joined streams by devising an encoding method for a video tile stream, while limiting load on the server. After a video signal that is the subject of encoding has been received, a tile stream is generated by encoding the video signal using appropriate prediction reference information. The video tile stream that has been obtained by encoding is output. Here, encoding of the video information utilizes a restricted prediction reference information method or a fixed prediction reference information method, so that errors caused by inconsistencies in prediction relationship of a signal do not arise even if streams, formed by each MB line of a frame of the video tile stream, are arbitrarily connected. At the time of connecting tile streams, it is possible to avoid inconsistencies in prediction information written into a stream determined at the time of encoding.

## Description

### Technical Field

The present invention relates to an encoding system and encoding method for video signals. In particular, the present invention relates to encoding technology suitable for arbitrarily connecting each MB line of a plurality of tile streams in units of each MB line, to form a single combined bit stream.

### Background Art

There has been a great deal of technical development with regard to giving video information high resolution, wide field of view, and high functionality. For example, in non-patent literature 1 below, a system is proposed for dividing a video acquired from a plurality of video cameras or an omnidirectional camera into tiles and encoding, and decoding and displaying only a tile video for a viewing position a user requires. Further, non-patent literature 2 below proposes a system for executing accesses to a high resolution panorama video that has been acquired from a plurality of cameras, based on Multi-View Coding, which is an extended standard of H.264/AVC. With this technology also, dividing and encoding of an input video are carried out at a transmission side (server side), and a plurality of encoded streams are transmitted in accordance with a viewing region required by a user (client terminal). At the user side (namely the client terminal), it is possible to decode this encoded stream and display the panorama video. In the following, a client terminal may be simply referred to as a client.

However, with the technology of the non-patent literature 1 and 2 described above, in both cases it is necessary to simultaneously decode and synchronously display a plurality of streams at the client. Although in non-patent literature 1 there is no mention regarding a transmission method, in non-patent literature 2 plural session control is also required in order to acquire a plurality of streams simultaneously. This increases the complexity of processing in the client, which means that particularly in an environment where computing resources are limited, such as a smartphone, it can be considered difficult to utilize a multi-vision service.

A system has therefore been proposed that does not transmit a plurality of streams, but creates a single stream by combining a plurality of streams at the server side, and then transmitting this single stream (non-patent literature 3 and patent literature 1 below). Hereafter, a plurality of streams before combination will be referred to as a tile stream, and the single stream after combination will be referred to as a joined stream.

With the technology of non-patent literature 3 and patent literature 1, only a joined stream that has been acquired from a delivery server is decoded and displayed at the client. This means that with this technology, complicated processing, such as simultaneous decoding of the plurality of streams, and synchronous display of decoded video signals, can be avoided at the client side. In this way, with this client system, it is possible to simultaneously playback video of a plurality of tiles using a conventional video playback system.

If the MPEG-2 or MPEG-4 standard is assumed, joined stream generation can be realized by connecting the right end of an MB (macroblock) line of a frame of particular tile stream with the left end of an MB line of a frame of another tile stream. Even if this type of connecting is performed, special inconsistencies do not arise when conforming to the MPEG-2 or MPEG-4 standard.

However, depending on the encoding system, if the previously described simple connection is carried out, image quality degradation (so-called errors) may arise due to inconsistencies in information being referenced by each MB (or blocks and partition contained in the MB).

In the following, an example of encoding that conforms to H.264/AVC baseline protocol, which is a benchmark encoding standard, is shown. With H.264/AVC, as intra (in-screen) prediction encoding, it is possible to select either "4 x 4 in-screen prediction encoding to reference adjacent pixels in 4 x 4 pixel block units" or "16 x 16 in-screen prediction encoding to reference adjacent pixels in 16 x 16 pixel block units". For example, with "4 x 4 in-screen prediction encoding", since it is encoding for the 4 x 4 pixel blocks, modes for referencing adjacent 4 x 4 pixel blocks exist. If it is assumed that a tile stream is encoded using such a mode, then at the time of connecting tile streams, if blocks that are different to those at the time of tile stream encoding are adjacent for some reason, image quality degradation will arise due to pixel reference information inconsistencies. This type of inconsistency also arises with other situations in encoding (for example, at the time of variable-length encoding of items indicating the number of non-zero coefficients after DCT).

With non-patent literature 3, a method of carrying out correction of prediction difference information has been proposed in order to avoid this problem. Specifically, some MBs for which inconsistencies arise are decoded up to a pixel region, and pixel signal correction (variable-length encoding of that MB, inverse quantization of a coefficient, inverse DCT, reconstruction of a residual error signal by re-predicting from adjacent pixel values, DCT, quantization) and prediction information correction from adjacent MBs are carried out.

### Citation List

### Non-patent literature

Non-patent literature 1: S. Heymann, A. Smolic, K. Muller, Y. Guo, J. Rurainski, P. Eisert, and T. Wiegand, "Representation, Coding and Interactive Rendering or High-Resolution Panoramic Images and Video using MPEG-4," Proc. Panoramic Photogrammetry Workshop, Berlin, Germany, Feb. 2005.
Non-patent literature 2: H. Kimata, S. Shimizu, Y. Kunita, M. Isogai and Y. Ohtani, "Panorama video coding for user-driven interactive video application," IEEE International Symposium on Consumer Electronics (ISCE2009), Kyoto, 2009.
Non-patent literature 3: N. Uchihara and H. Kasai, "Fast H.264/AVC stream joiner for interactive free view-area multivision video," IEEE Transactions on Consumer Electronics, vol.57, no.3, pp.1311-1319, August 2011.
Non-patent literature 4: E.Kaminsky, D.Grois, O.Hadar, "Efficient real-time video-in-video insertion into a pre-encoded video stream for the H. 264/AVC, " IEEE International Conference on Imaging Systems and Techniques (IST), pp.436-441, 1-2 July 2010.

### Patent Literature

Patent literature 1: Japanese patent laid-open No. 2011-24018

### Summary Of The Invention

### Technical Problem

In the case of assuming a service provider in an actual environment, a delivery server must process requests from many clients, making it necessary to reduce the delivery server load to achieve increased speed. However, the correction processing for prediction error information that was described in non-patent literature 3 increases the amount of processing on the server since there is accompanying partial decoding processing of plural streams. Also, non-patent literature 4 is technology relating to video-in-video for overlaying a single different video within a screen of a single video. With this technology, in the processing for superimposing these two videos a method of saving various information relating to encoding mode control and encoding in separate files is adopted, in order to reduce the decoding processing for the two encoded bit streams as much as possible. However, since, in the superimposing processing, recalculation processing of motion vectors and non-zero coefficients, and re-encoding processing are assumed, there is a problem that these will increase the processing on the server.

The present invention has been conceived in view of the above-described situation. One object of the present invention is to provide technology that can generate joined streams by devising an encoding method for a video tile stream, while limiting load on the server. Another object of the present invention is to provide technology for constructing a single bit stream by arbitrarily connecting MB lines of a video tile stream.

### Solution To Problem

Means for solving the above-described problems can be described as in the following aspects.

### (Aspect 1)

An encoding system for performing encoding of a video tile stream, so as to make it possible to form a single joined stream by arbitrarily connecting each MB line of a plurality of video tile streams in units of each MB line, comprising
a video signal receiving section, an encoding processing section and a video tile stream output section, wherein
the video signal receiving section receives image signals as an object of encoding,
the encoding processing section is configured to generate a video tile stream by a encoding the video signal using appropriate prediction reference information,
and the encoding processing section is configured to use a restricted prediction reference information method or a fixed prediction reference information method, in the encoding, so that errors caused by inconsistencies in prediction relationship of a signal do not arise even if each MB line of the video tile stream is arbitrarily connected, and
the stream output section is configured to output the video tile stream that has been obtained by encoding in the encoding processing section.

### (Aspect 2)

The encoding system of aspect 1, wherein the restricted prediction reference information method is a prediction method that restricts encoding information so that between MB lines of different video tile streams there are no dependencies on combinations of encoding information held by respectively adjacent MBs.

### (Aspect 3)

The encoding system of aspect 1, wherein the restricted prediction reference information method performs the following processing:
(1) processing to encode a frame forming the video signal using either of two encoding modes, namely intra-frame predicted encoding or inter-frame predicted encoding; and
2) processing for, in a plurality of MBs in the frames that have been subjected to intra-frame encoding, performing encoding using a prediction mode that references pixel values that do not rely on content of respectively adjacent MBs, between MB lines of different video tile streams.

### (Aspect 4)

The encoding system of aspect 1, wherein the fixed prediction reference information method is a method that uses prediction information that has been fixed to predetermined values.

### (Aspect 5)

The encoding system of aspect 1, wherein the fixed prediction reference information method performs the following processing:
(1) processing, for at least some MBs, among those that are MBs constituting the video tile stream, and that are positioned at edge portions of the frame of the video tile stream, to encode with the number of non-zero coefficients in brightness coefficient sequences and color difference coefficient sequences set to a predetermined fixed value; and
(2) processing for, in the case of MBs that reference the number of the non-zero coefficients of MBs that will be adjacent to edge portions of a frame of the video tile stream, encoding under the assumption that adjacent MBs exist that have the number of non-zero coefficients that is the fixed value.

### (Aspect 6)

The encoding system of aspect 1, wherein the fixed prediction reference information method performs the following processing:
(1) processing to carry out inter frame predicted encoding, for at least some MBs among MBs that are positioned at edge portions of a frame of a video tile stream, with motion vectors held by the MBs fixed to given motion vectors;
(2) processing for, in the case of MBs that reference motion vectors of MBs that will be adjacent to edge portions of a frame of the video tile stream, carrying out inter frame predicted encoding on the assumption that adjacent MBs exist having the given motion vector.

### (Aspect 7)

The encoding system of any one of aspects 1 - 6, wherein the encoding processing section is provided with an MB line code amount insertion section, and this MB line code amount insertion section is configured to generate additional information for defining position of the MB line within the video tile stream at the time of the encoding.

The additional information for defining the position of the MB line within the video tile stream can be used at the time of connecting MB lines

### (Aspect 8)

A connection system, for connecting MB lines constituting a video tile stream that has been encoded using the system of any one of aspects 1 - 6, wherein
the connection system is provided with a video tile stream receiving section, a joining processing section and a joined stream output section,
the video tile stream receiving section is configured to receive the video tile stream,
the joining processing section is configured to generate a joined stream by carrying out the following processing:
(1) processing to detect end sections of the MB lines of the video tile stream, and acquire a stream corresponding to the MB lines;
(2) processing to insert MBs for edge adjustment at end sections of the MB line, so as to be adjacent to positions constituting edges of a frame of a joined stream in a state where the tile stream has been connected, wherein some of the MBs for edge adjustment have been encoded by the encoding system of any one of aspects 1 - 7; and
   the joined stream output section is configured to output the joined stream that has been generated by the joining processing section.

Here, detection of end sections of the MB lines includes processing to detect end sections of MB lines by reading code amount of an MB line that has been generated and embedded by the MB line code amount insertion section of aspect 7.

### (Aspect 9)

An encoding method for performing encoding of a video tile stream, so as to make it possible to form a single joined stream by arbitrarily connecting each MB line of a plurality of video tile streams in units of each MB line, comprising:
(1) a step of receiving a video signal constituting an object of encoding,
(2) a step of generating a tile stream by encoding the video signal using appropriate prediction reference information, and
(3) a step of outputting the video tile stream that has been obtained by encoding, wherein
the encoding of the video information is configured to use a restricted prediction reference information method or a fixed prediction reference information method, so that errors caused by inconsistencies in prediction relationship of a signal do not arise even when streams, formed by each MB line of a frame of the video tile stream, are arbitrarily connected.

### (Aspect 10)

A computer program for causing execution of each of the steps in aspect 9 on a computer.

### (Aspect 11)

A data structure generated by connecting streams corresponding to MB lines that constitute a tile stream that has been encoded by the system of any one of aspects 1 - 7, wherein
MBs for edge adjustment are inserted at end sections of the MB lines, so as to be adjacent to positions constituting edges of a frame of a joined stream in a state where the video tile stream has been connected, and
at least some of the MBs for edge adjustment have been encoded by the encoding system of aspects 1 - 7.

Regarding the computer program and/or the data structure described above, it can be utilized on a computer by being stored in an appropriate storage medium such as, for example, an electrical magnetic or optical medium. Also, this storage medium can be utilized via the Internet, for example, it may be a storage medium on a cloud computing system.

### Advantageous Effect Of The Invention

According to the present invention, it is possible to restrict the load on a processing device such as a server that generates a joined stream. Also, according to the present invention, it is possible to form a single bit stream by arbitrarily connecting MB lines of a video tile stream.

### Brief Description Of The Drawings

Fig. 1 is a block diagram showing the schematic structure of a video providing system incorporating the encoding system and connection system of one embodiment of the present invention.

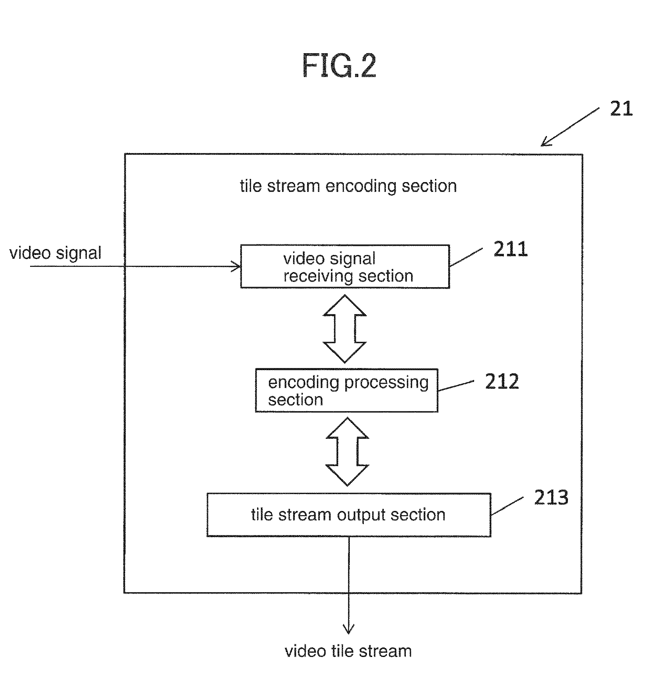

Fig. 2 is a block diagram showing the schematic structure of a tile stream encoding section of one embodiment of the present invention.
Fig. 3 is a block diagram showing the schematic structure of an encoding processing section of one embodiment of the present invention.
Fig. 4 is a block diagram showing the schematic structure of a joined stream generating section of one embodiment of the present invention.
Fig. 5 is a flowchart for describing overall operation of the video providing system of Fig. 1.
Fig. 6 is a flowchart for describing encoding processing of this embodiment.
Fig. 7 is a flowchart for describing encoding mode determination processing of this embodiment.
Fig. 8 is a flowchart for describing motion search and compensation processing of this embodiment.
Fig. 9 is an explanatory diagram for explaining size of partitions.
Fig. 10 is an explanatory drawing for describing motion vector encoding for a partition.
Fig. 11 is an explanatory drawing for describing intra prediction mode determination processing of this embodiment
Fig. 12 is an explanatory drawing for describing intra-prediction mode adopted in the processing of Fig. 11.
Fig. 13 is a flowchart for describing coefficient adjustment processing of this embodiment.
Fig. 14 is a flowchart for describing variable length encoding processing of this embodiment.
Fig. 15 is an explanatory drawing for describing appearance when a frame of a joined stream is formed by assembling frames of a tile stream.
Fig. 16 is a flowchart for describing joined stream generating processing of this embodiment.
Fig. 17 is an explanatory drawing for describing appearance of inserting edge adjustment MBs around the edge of a frame of a joined stream.
Fig. 18 is an explanatory drawing for describing encoding conditions of edge adjustment MBs.
Fig. 19 is an explanatory drawing for describing a data structure of a joined stream that has had edge adjustment MBs inserted.
Fig. 20 is a flowchart for describing a sequence for inserting MB line code amount.

### Description Of The Embodiments

An encoding system of embodiments of the present invention will be described in the following with reference to the attached drawings.

### (Structure Of The Embodiment)

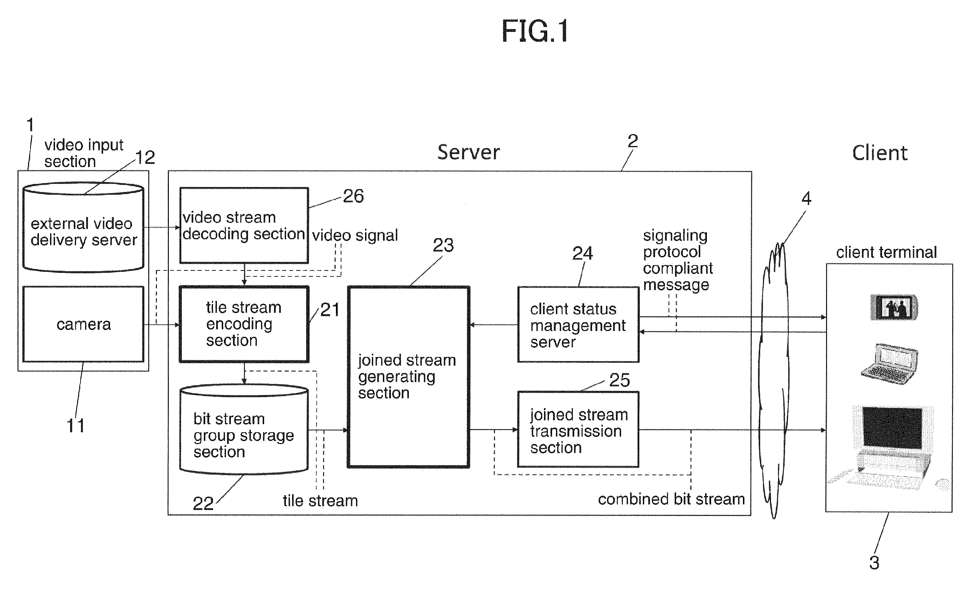

First, the overall schematic structure of a video signal providing system that uses the encoding system of this invention will be described with reference to Fig. 1.

This system is made up of a video input section 1, a server 2, a client terminal 3, and a network 4.

### (Video Input Section)

The video input section 1 is provided with a camera 11 or an external video delivery server 12. Any device that can acquire high definition video images may be used as the camera 11. A previously encoded video bit stream resides on the external video delivery server 12, and the server 2 acquires video bit streams from the server 12 as required. It is possible to use an existing camera or a video delivery server as the video input section 1, and so further detailed description will be omitted.

### (Server)

The server 2 comprises a tile stream encoding section 21, a bit stream group storage section 22, a joined stream generating section 23, a client status management server 24, a joined stream transmission section 25, and a video stream decoding section 26.

The video stream decoding section 26 decodes a video bit stream that has been transmitted from the external video delivery server 12 to generate a video signal, and transmits this video signal to the tile stream encoding section 21. Video signal here means an uncompressed signals.

The tile stream encoding section 21 is a functional element corresponding to one example of the encoding system of the present invention. The tile stream encoding section 21 receives a video signal, which is the object of encoding, from the camera 11 or the video stream decoding section 26. The tile stream encoding section 21 of this embodiment performs encoding of a video tile stream, so as to make it possible to form a single joined stream by arbitrarily connecting each MB line of a plurality of video tile streams in units of each MB line, as will be described later. In this specification MB means a macroblock.

The tile stream encoding section 21 comprises a video signal receiving section 211, an encoding processing section 212, and a video tile stream output section 213.

The video signal receiving section 211 receives a video signal, which is the subject of encoding, that has been transmitted from a camera of the video input section 1 or the video stream decoding section 26.

The encoding processing section 212 is configured to generate a video tile stream by a encoding the video signal using appropriate prediction reference information. Further, the encoding processing section 212 is configured to use a restricted prediction reference information method or a fixed prediction reference information method, in the encoding, so that errors caused by inconsistencies in prediction relationship of a signal do not arise even if each MB line of the video tile stream is arbitrarily connected. The restricted prediction reference information method and the fixed prediction reference information method will be described later. The encoding processing section 212 is also configured to use an MB line code amount insertion method in the encoding. As the MB line code amount insertion method, there is a method of holding a bit amount for respective MB line code streams (referred to in this specification as MB line code amount) for all frames within the streams, in order to execute joining processing for respective video tile streams at high speed. However, it is also possible to hold the MB line code amount as a separate file or information instead of holding it within the tile streams.

The restricted prediction reference information method of this embodiment is a prediction method that restricts encoded information so that between MB lines of different video tile streams there are no dependencies on combinations of encoding information held by respectively adjacent MBs.

Specifically, the restricted prediction reference information method of this embodiment provides the following processing:
(1) encoding a video signal, for each frame, in either of two types of encoding mode, namely intra frame predicted encoding and inter frame predicted encoding, wherein intra frame predicted frames are to be inserted synchronously or asynchronously; and
(2) in a plurality of MBs in the intra-frame prediction frames, performing encoding using a prediction mode that references pixel values that do not rely on content of respectively adjacent MBs, between MB lines of different video tile streams.

A specific example of the restricted prediction reference information method will be described later.

The fixed prediction reference information method of this embodiment is a method that uses prediction information that has been fixed to predetermined values.

More specifically, the fixed prediction reference information method provides the following processing:
(1) processing, for at least some MBs, among those that are MBs constituting the video tile stream, and that are positioned at edge portions of the frame of the video tile stream, to encode with a number of non-zero coefficients in brightness coefficient sequences and color difference signal strings (hereafter referred to as number of nonzero coefficients) of at least some of the MBs set to a predetermined fixed value; and
(2) processing for, in the case of MBs that reference the number of the non-zero coefficients of MBs that will be adjacent to edge portions of a frame of the video tile stream, encoding under the assumption that adjacent MBs exist having the "number of non-zero coefficients" that is the fixed value.

Further, the fixed prediction reference information method of the embodiment provides the following processing:
(1) processing to carry out inter frame predicted encoding, for at least some MBs among MBs that are positioned at edge portions of a frame of a video tile stream, with motion vectors held by the MBs fixed to given motion vectors;
(2) processing for, in the case of MBs that reference motion vectors of MBs that will be adjacent to edge portions of a frame of the video tile stream, carrying out interframe predicted encoding on the assumption that adjacent MBs exist having the given motion vector. A specific example of the fixed prediction reference information method will be described later.

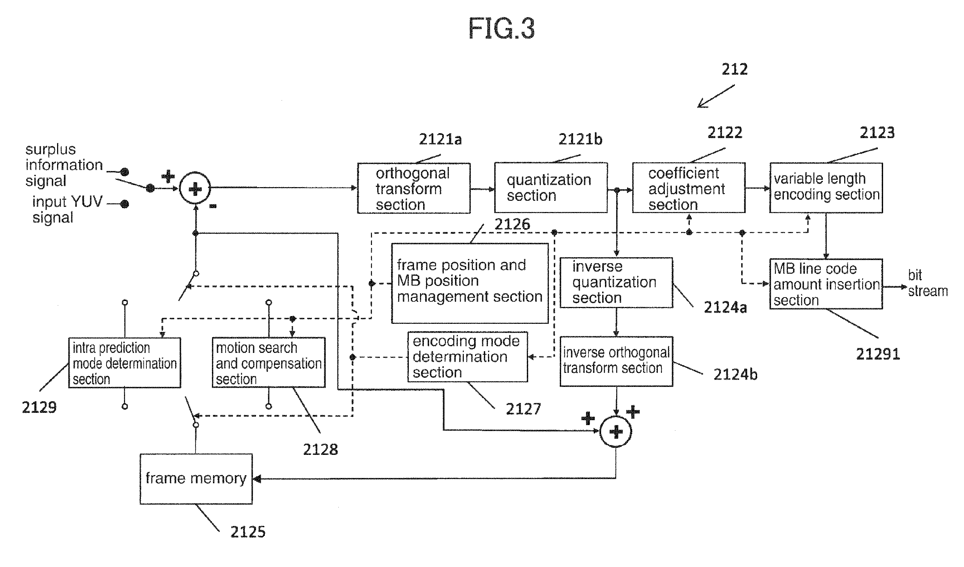

As shown in Fig. 3, the encoding processing section 212 comprises an orthogonal transform section 2121a, a quantization section 2121b, a coefficient adjustment section 2122, a variable length encoding section 2123, an inverse quantization section 2124a, an inverse orthogonal transform section 2124b, a frame memory 2125, a frame position and MB position management section 2126, an encoding mode determination section 2127, a movement search and compensation section 2128, an intra prediction mode determination section 2129, and an MB line code amount insertion section 21291. Among these components, the structure and operation of the orthogonal transform section 2121a, quantization section 2121b, inverse quantization section 2124a, inverse orthogonal transform section 2124b, and frame memory 2125 can be the same as those of the related art (for example, of H.264) and so detailed description is omitted. Operation of each of the remaining functional elements will be described in detail in the description for the encoding processing method, which will be described later.

The tile stream output section 213 is configured to output a video tile stream, that has been obtained through encoding by the encoding processing section 212, to the bit stream group storage section 22.

The bit stream group storage section 22 stores video tile streams that have been generated by the tile stream encoding section 21. The bit stream group storage section 22 can transmit specified MB bit streams strings (video tile streams), which are some of the video tile streams, to the joined stream generating section 23 in response to a request from the joined stream generating section 23.

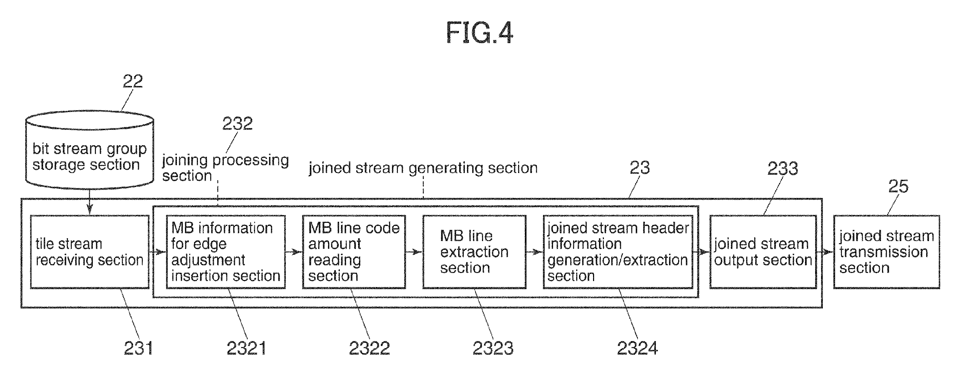

The joined stream generating section 23 is one example of a connecting system for connecting MB lines constituting a video tile stream that has been encoded by the tile stream encoding section 21. As shown in Fig. 4, the joined stream generating section 23 comprises a video tile stream receiving section 231, a joining processing section 232 and a joined stream output section 233.

The video tile stream receiving section 231 is configured to receive a video tile stream from the bit stream group storage section 22.

The joining processing section 232 comprises an edge adjustment MB information insertion section 2321, an MB line code amount reading section 2322, an MB line extraction section 2323, and a joined stream header information generation/insertion section 2324.

In order to generate a joined stream, the edge adjustment MB information insertion section 2321 carries out the following processing:
- processing to insert MBs for edge adjustment at end sections of at least some MB lines, so as to be adjacent to positions constituting edges of a frame of a joined stream in a state where the video tile stream has been connected. However, the edge adjustment MBs here have been encoded by the encoding system described above.

The MB line code amount reading section 2322 is a section for reading an MB line code amount that has been inserted by the MB line code amount insertion section 21291 of the encoding processing section 212. By reading the MB line code amount it is possible to detect end sections of the MB lines at high speed.

The MB line extraction section 2323 carries out processing to extract code strings from a tile stream only for a bit amount of MB line code strings that have been acquired by the MB line code amount reading section 2322. As a result, it is possible to avoid variable length decoding processing which is required conventionally in acquiring MB line code string bit amount. However, it is naturally also possible to extract code strings without using MB line code string bit amount, by carrying out variable length decoding processing.

The joined stream header information generation/insertion section 2324 generates and inserts header information for the joined stream. Generation and insertion of the joined stream header is also the same as conventional processing, and so detailed description is omitted

The joined stream output section 233 is configured to output the joined stream that has been generated by the joining processing section 232. An example of a generated joined stream will be described later.

The client status management server 24 receives requests transmitted from the client terminal 3, for example, information on a video region a user has requested to view (a specific example will be described later).

The joined stream transmission section 25 transmits a joined stream that has been created by the joined stream generating section 23 to the client terminal 3 via the network 4.

### (Client Terminal)

The client terminal 3 is a terminal for the user to transmit necessary instructions to the server 2, or to receive information that has been transmitted from the server 2. The client terminal 3 is operated by the user, but may also be operated automatically without the need for user operation. As the client terminal 3 it is possible to use, for example, a mobile telephone (which also includes a so-called smart phone), a mobile computer, a desktop computer etc.

### (Network)

The network 4 is for carrying out exchange of information between the server 2 and the client terminal 3. The network 4 is normally the Internet, but may also be a network such as a LAN or WAN. The network is not particularly restricted in terms of the protocol used or the physical medium, as long as it is possible to exchange necessary information.

### (Operation Of This Embodiment)

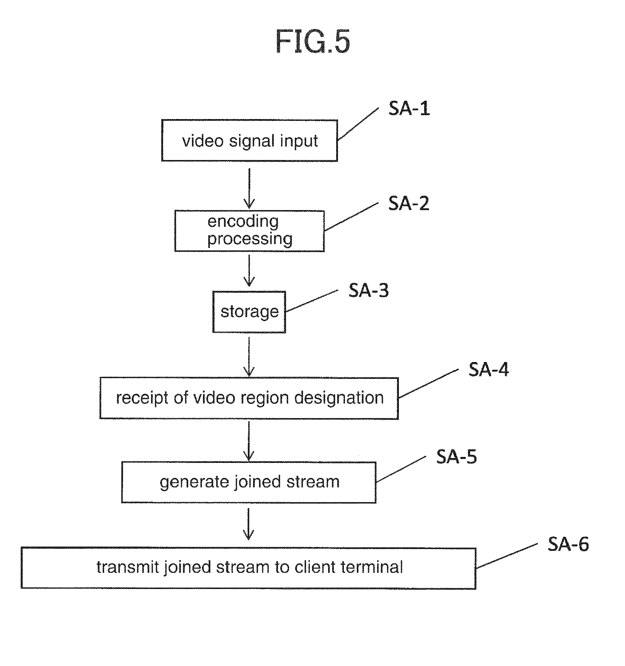

Next, the encoding method of the system of this embodiment will be described mainly with reference to Fig. 5.

### (Steps SA-1 to in Fig. 5)

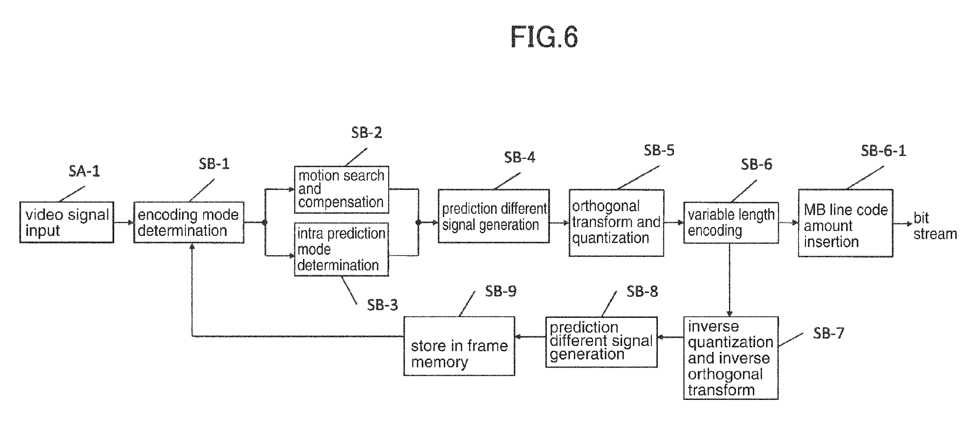

First, a video signal from the video input section 1 is taken in to the encoding processing section 21 of the server 2. Details of the encoding processing at the encoding processing section 21 will be described based on Fig. 6. Subsequent encoding processing is basically all processing per MB unit. Here, as described in non-patent literature 3 and patent literature 1, an MB line is made of MBs, a frame of a tile stream is made up of MB lines, and a frame of a joined stream is made up of frames of tile streams.

### (Step SB-1 in Fig. 6)

In the encoding processing section 21, an encoding mode is first determined for each MB. As the encoding mode there is either intra frame predicted encoding (so called intra encoding) or inter frame predicted encoding (so called inter encoding).

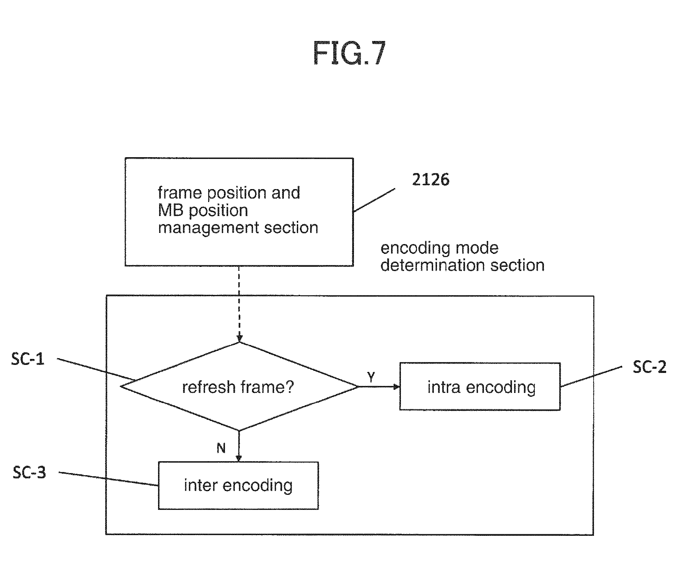

One example of an encoding mode determination processing algorithm is shown in Fig. 7.

### (Step SC-1 in Fig. 7)

First, it is determined whether or not a frame to which the MB to be process belongs is a refresh frame. This determination utilizes a number of processed frames obtained from the frame position and MB position management section 2126. Specifically, the frame position and MB position management section 2126 internally holds a variable for counting a frame number and an MB number every time processing is executed, and it is possible to acquire processing object frame number and MB number, by referencing this variable. Then, which timing frame should be a refresh frame is understood in advance in the encoding processing section 21, which means that it is possible to carry out determination of the refresh frame using the information of the number of processed frames and given timing information. Also, a refresh frame is normally inserted periodically (that is, every specified time interval), but periodicity is not essential.

### (Step SC-2 in Fig. 7)

If the result of determination in step SC-1 was Yes (namely that there was a refresh frame), it is determined that the MB should be subjected to intra frame encoding.

### (Step SC-3 in Fig. 7)

If the result if decision in step SC-1 was No, it is determined that the MB should be subjected to inter frame predicted encoding.

With the above-described algorithm, it is possible to determine the encoding mode of each MB.

### (Step SB-2 in Fig. 6)

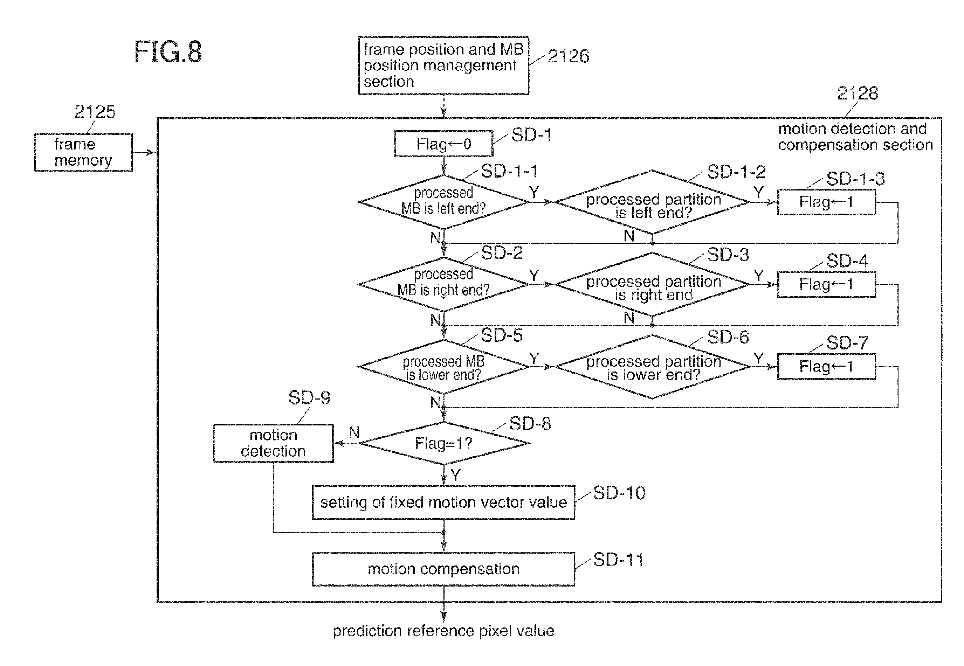

Next, procedures for motion search and compensation, by the motion search and compensation section 2128, will be described mainly with reference to Fig. 8.

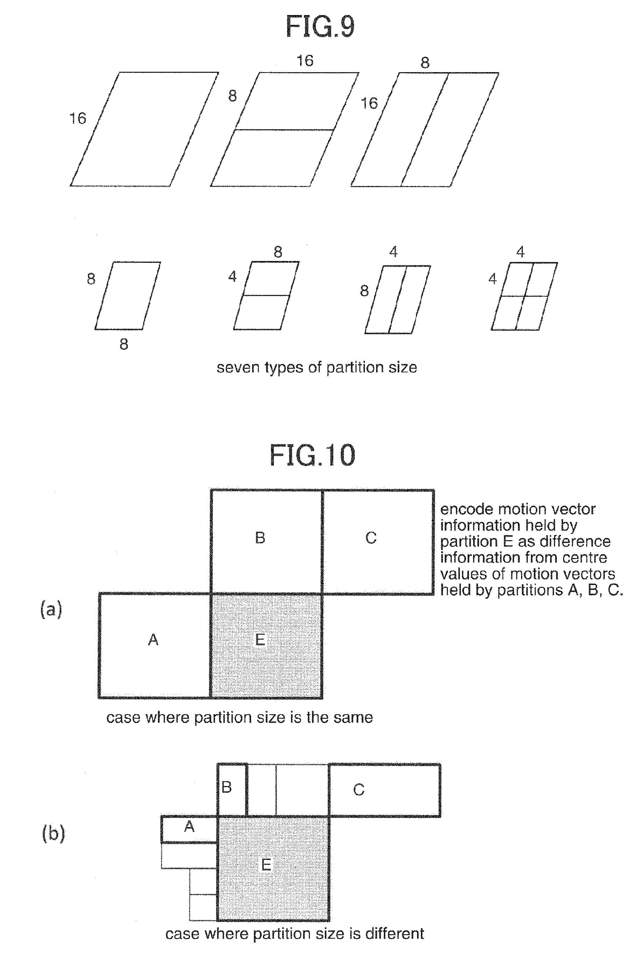

An overview of H.264 motion search and compensation will be described as a premise. With H.264, motion search and compensation is carried out in units of pixel groupings within an MB called "partitions". In H.264 there are seven types of pixel size for a partition, call 16 x 16, 8 x 16, 16 x 8, 8 x 8, 4 x 8, 8 x 4, and 4 x 4 (refer to Fig. 9).

With H.264, motion vector information held by partition E shown in Fig. 10(a) is encoded as a difference value from a median value of motion vectors held by adjacent partitions A, B and C. Fig. 10 (a) shows the case where each partition is the same. However, as shown in Fig. 10(b), the sizes of adjacent partitions may be different, and the encoding method in this case is also the same as described previously.

### (Step SD-1 in Fig. 8)

As initialization processing, a flag is set to 0. In subsequent processing it is determined to what position in a frame a processed MB belongs based on MB position that has been acquired from the frame position and MB position management section 2126.

### (Steps SD-1-1 to SD1-3 in Fig. 8)

Next, it is determined whether or not an MB to which a partition, which is the processing object, belongs is the left end of a frame.

If the result of determination is Yes, it is next determined whether that partition is located at the left end within the MB (namely the left end of a frame). If the determination is Yes the flag is set to 1.

### (Step SD-2 to 4 in Fig. 8)

If the result of determination in step SD-1-1 was No, it is determined whether or not the MB to which the partition, which is the processing object, belongs is the right end of a frame.

If the result of determination is Yes, it is next determined whether that partition is the right end within the MB (namely of a frame). If the determination is Yes the flag is set to 1.

### (Steps SD-5 to 7 in Fig. 8)

If the result of determination in step SD-2 was No, it is determined whether or not the MB to which the partition, which is the processing object, belongs is the lower end of a frame.

If the result of determination is Yes, it is next determined whether that partition is the lower end within the MB (namely of a frame). If the determination is Yes the flag is set to 1.

### (Steps SD-8 to 9 in Fig. 8)

When the flag attached to the MB is not 1 (namely when it remains at 0) predicted information is restricted so as to refer to block information within the frames, and motion search is performed based on pixel values of a previous frame that has been acquired from the frame memory. This method is one example of a restricted prediction reference information method.

Specifically, "carrying out restriction of prediction reference information to be used for reference of block information within the frames" is realized by providing a restriction of making a search range for the motion vector within the frame. Restriction of the motion vector search range is also pointed out in literature (paragraphs 0074 to 0084 of Japanese Patent laid-open No. 2011-55219). However, with this literature control is performed to set only MB lines that have been subjected to error correction as a motion vector search restricted range so that regions potentially containing other errors are not referred to, for the purpose of suppressing error propagation. Conversely, with this embodiment, the motion vector search restricted range is made within a frame, and not within a target MB line.

### (Step SD-10 in Fig. 8)

If the result of determination in step SD-8 is Yes, a fixed motion vector value is set. Specifically, a fixed value that is stored at the system side is read out. The fixed motion vector value setting corresponds to one example of a fixed prediction reference information method. Specifically, the same location in the previous frame is referenced (case where the motion vector is fixed at (0, 0) ).

### (Step SD-11 in Fig. 8)

Next, the movement search and compensation section 2128 carries out movement compensation processing using a searched motion vector value or a fixed motion vector value. This motion compensation processing itself may be the same as routine processing with H.264, and so detailed description will be omitted.

With the previously described algorithm, it is possible to make "a motion vector value of a partition that has the possibility of being referenced from adjacent partitions, since it is at the right end, left end or lower end of a frame of the tile stream" a fixed value. By doing this it becomes possible to carry out correct decoding without affecting the content of adjacent MBs, even if adjacent MBs are different at the time of encoding and the time of connecting.

### (Step SB-3 in Fig. 6)

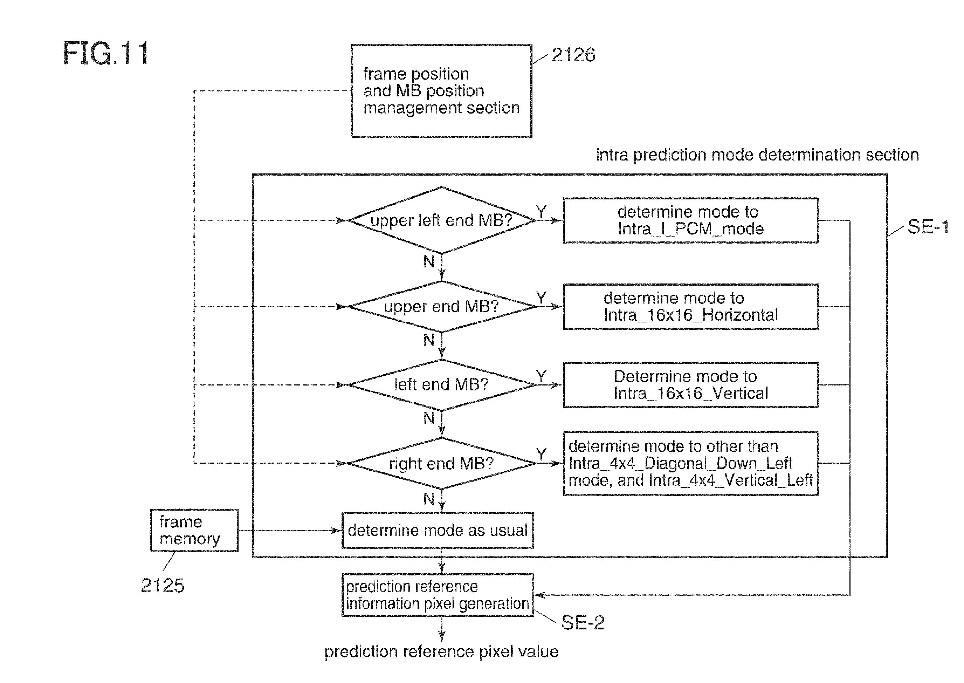

Next, a processing algorithm at the intra prediction mode determination section 2129 will be described with reference to Fig. 11.

### (Step SE-1 in Fig. 11)

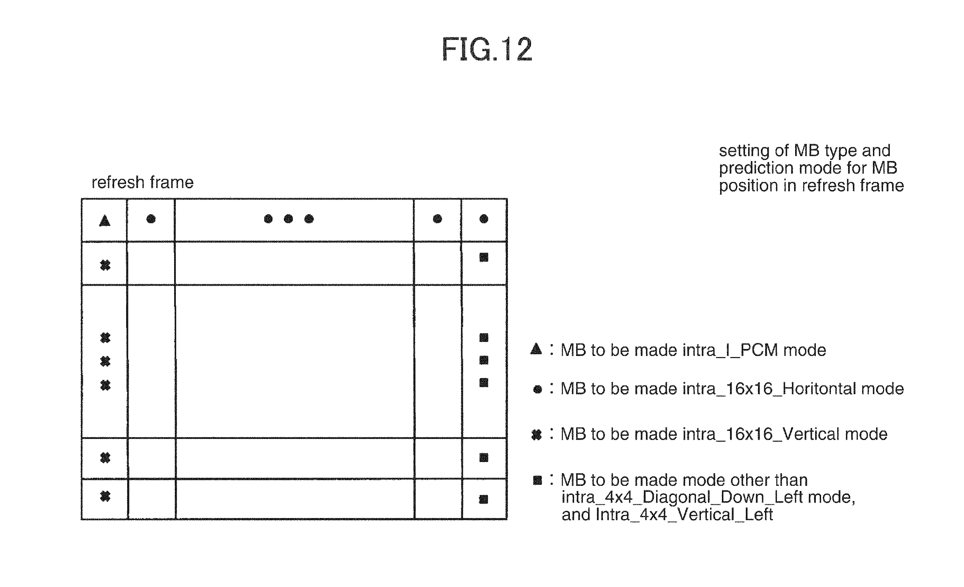

First, the intra prediction mode determination section 2129 sets a prediction mode shown in Fig. 12 in accordance with the MB position. As shown in Fig. 12, with this mode a prediction mode that references pixel values of MBs that contact the top of each MB is used for a plurality of MBs at an inner left end of the video tile stream, and a prediction mode that references pixel values of MBs that contact the left of each MB is used for a plurality of MBs at an upper end. Also for right end MBs a "prediction mode other than the two modes that carry out prediction from the upper right MB (refer to Fig. 12)" is used, and further an MB of upper left end within the same frame uses a prediction mode that does not reference any other MBs (IPCM mode). This type of prediction mode restriction is one example of a restricted prediction reference information method. By setting in this way, since it is possible to carry out encoding without referencing MB values of adjacent frames, correct decoding becomes possible even if prediction information referenced for respective tile streams is different at the time of encoding and at the time of connecting frames. That is, in this drawing the following prediction mode restriction is carried out:
▲: MB to be made intra_I_PCM mode
●: MB to be made intra_16x16_Horizontal mode
X: MB to be made intra_16x16_Vertical mode
■ : MB to be made a mode other than Intra_4x4_Diagonal_Down_Left mode or Intra_4x4_Vertical_Left

### (Step SE-2 in Fig. 11)

Prediction reference pixel values are generated from either "adjacent pixel signals that have already been subjected to encoding and decoding" or "pixel signals of a previous frame acquired from frame memory" in accordance with the prediction mode that was set in step SE-1, and the prediction reference pixel values output. This processing may be the same as the routine processing with H. 264, and so detailed description will be omitted.

### (Step SB-4 and SB-5 in Fig. 6)

Next, a prediction difference signal with respect to an input signal are generated using the result of processing of previously described steps SB-2 and SB-3. Orthogonal transform and quantization are also carried out. Generation of a prediction difference signal and the procedure for orthogonal transform and quantization may be the same as routine processing in H.264, and so detailed description will be omitted.

### (Step SB-6 in Fig. 6)

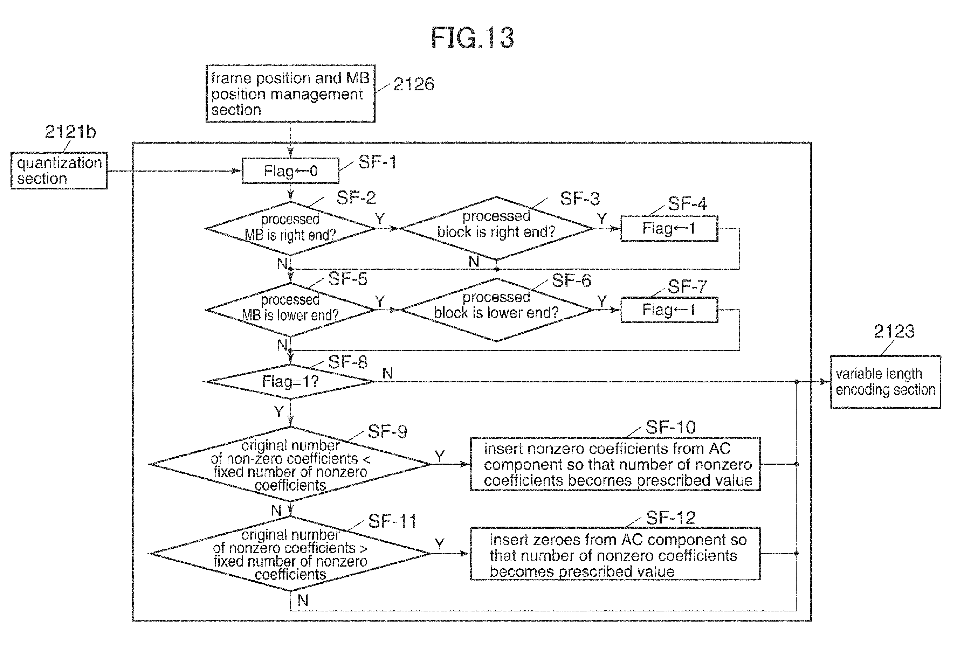

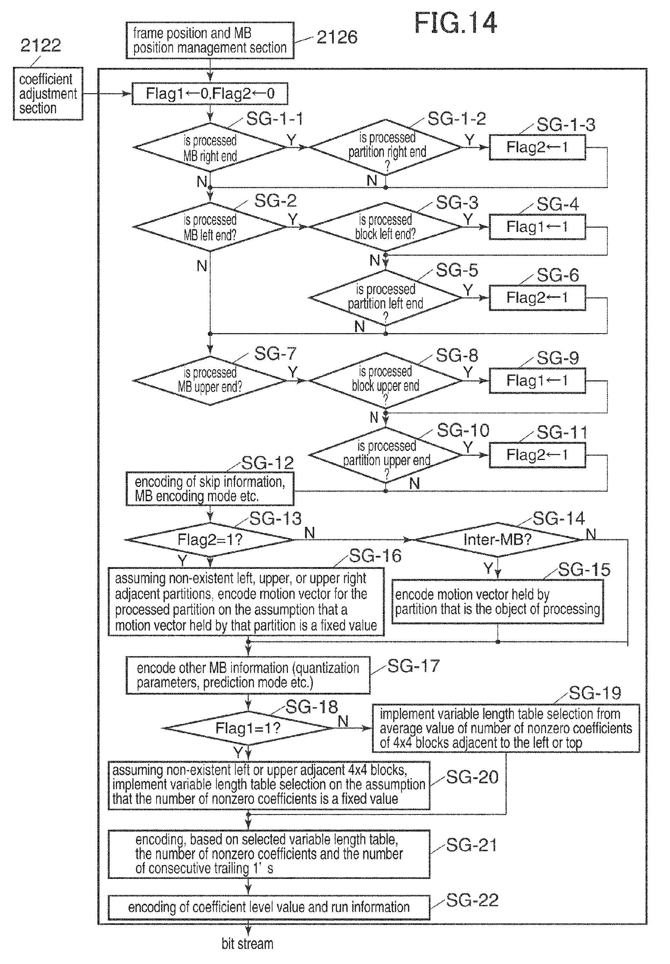

Next, variable length encoding is carried out by the coefficient adjustment section 2122 and the variable length encoding section 2123 (refer to Fig. 3). With this variable length encoding, processing for coefficient adjustment is carried out before routine variable length encoding processing. In the following description, first the coefficient adjustment processing in the coefficient adjustment section 2122 will be described based on Fig 13, and then the variable length encoding processing in the variable length encoding section 2123 will be described based on Fig. 14.

### (Step SF-1 in Fig. 13)

In order to determine a block that is the subject of coefficient adjustment based on MB position and block position within that MB, a flag therefor is set to zero. Here, MB position information is acquired from the frame position and MB position management section 2126. Processing for the coefficient adjustment and variable length encoding is carried out in block units, being a set of conversion coefficients within an MB. The point of processing in block units is the same as routine processing with H.264, and so detailed description would be omitted.

### (Steps SF-2 to SF-4 in Fig. 13)

In the case where the MB that is the subject of processing is at the right end of a frame, it is determined whether or not the processing block is at the right end of a block (namely the right end of the frame), and if the determination is Yes the flag is set to 1.

### (Steps SF-5 to SF-7 in Fig. 13)

If the result of determination in step SF-5 is No, processing advances to step SF-5. Here, in the case where the MB that is the subject of processing is at the lower end of a frame, it is determined whether or not the processing block is at the lower end of a block (namely the lower end of the frame), and if the determination is Yes the flag is set to 1.

### (Step SF-8 in Fig. 13)

After that, it is determined whether or not the flag for that MB is 1, and if the result of the determination is No there is a transition to variable length encoding processing.

### (Steps SF-9 to SF-10 in Fig. 13)

If the result of determination in step SF-08 is Yes, the number of nonzero coefficients of that block is compared with a number of nonzero coefficients that has been set in advance (that is, held at the system side). The number of nonzero coefficients that has been set may be different for a brightness space (Y) and a color different space (UV) of a YUV signal. If the number of nonzero coefficients of the block is smaller than the number of nonzero coefficients that has been has been set in advance, a coefficient having a value other than 0 is inserted from a high-frequency component side of the number of nonzero coefficients. In this way, it is possible to make the number of nonzero coefficients match a preset value. Even if a coefficient having a value other than zero is inserted to the high-frequency component side, the effect on image quality is small.

### (Steps SF-11 to 12 in Fig. 13)

If the number of nonzero coefficients of the block is larger than the number of nonzero coefficients that has been set in advance, a coefficient having a value of 0 is inserted from a high-frequency component side of the number of nonzero coefficients, instead of a coefficient having a value other than 0. In this way, it is possible to make the number of nonzero coefficients match a preset value. Even if a coefficient having a value of zero is inserted to the high-frequency component side as a replacement for a coefficient having a value other than 0, the effect on image quality is small. Using a fixed number of nonzero coefficients corresponds to one example of a fixed prediction reference information method.

### (Step SG-1 in Fig. 14)

In the following, a specific example of variable length encoding processing will be described with reference to Fig. 14. Here, an MB that has been subjected to coefficient adjustment is made the subject of variable length encoding by instruction from the frame position and MB position management section 2126. First, initialization is carried out by setting values of both a flag 1 and a flag 2, for use in determination of processing of an MB that will be the subject, to 0.

### (Steps SG-1-1 to SG-1-3 in Fig. 14)

If an MB that is the subject of processing is at the right end of a frame, and a partition constituting the subject of processing within the MB is at the right end of the MB, flag 1 is set to 1.

### (Steps SG-2 to 6 in Fig. 14)

If an MB that is the subject of processing is at the left end of a frame, and a block constituting the subject of processing within the MB is at the left end of the MB, flag 1 is set to 1. Further, if a partition that constitutes a subject of processing is at the left end, the flag 2 is set to 1.

### (Steps SG-7 to 11 in Fig. 14)

If an MB that is the subject of processing is at an upper end of a frame, and a block constituting the subject of processing within the MB is at the upper end of the MB, flag 1 is set to 1. Further, if a partition that constitutes a subject of processing is at the upper end, the flag 2 for that MB is set to 1. Here, if the result of determination in step SG-7 is No, normal variable length encoding is carried out, and so illustration is omitted. In the event that the result of determination in SG-10 is No, processing transitions to step SG-12.

### (Step SG-12 in Fig. 14)

Next, encoding for skip information and MB encoding mode, etc. is carried out. This processing is the same as the processing for conventional H.264, and so detailed description is omitted.

### (Steps SG-13 to 15 in Fig. 14)

Next, if the flag 2 is not 1, and that MB is for interframe predicted encoding, a motion vector held by the partition that is the subject of processing is encoded by a normal method. If that MB is for interframe encoding, processing transitions to SG-17.

### (Step SG-16 in Fig. 14)

If the result of determination in step SG-13 is Yes, it is assumed that partitions exist adjacently to the left, top or upper right of the partition that is the subject of processing. Then, on the assumption that a motion vector held by that partition has a given fixed value, the motion vector of the partition that is the subject of processing is encoded. Here, at the time of encoding the motion vector that is held by that partition, prediction reference information is generated from adjacent partitions to the left, top and upper right, as was described in Fig. 10, and difference values between the given fixed value is encoded. As a result, to inhibit prediction reference information inconsistencies at the time of connection, encoding of the motion vectors is carried out assuming that these partitions exist.

### (Step SG-17 in Fig. 14)

Next, other MB information is encoded.

### (Steps SG-18 and 19 in Fig. 14)

Next, if flag 1 of the MB that is the subject of processing is not 1, a variable length table is selected based on an average value of the number of nonzero coefficients in blocks that are adjacent to the left or above. This processing is the same as the routine processing with H.264, and so detailed description will be omitted.

### (Step SG-20 in Fig. 14)

If the flag 1 of the MB that is the subject of processing is 1, adjacent blocks to the left or above are assumed, even though they do not exist. On that basis, a variable length table is selected on the assumption that the number of nonzero coefficients of these adjacent blocks to the left and above is a fixed value. In this way, it is possible to select the correct variable length table even if frames of the tile stream are different at the time of encoding and at the time of connection, and it is possible to carry out variable decoding normally.

### (Steps SG-21 to 22 in Fig. 14)

After step SG-19 or step SG-20, variable length encoding processing is carried out. However, it is preferable to adjust block coefficient sequences so as to partition a bit stream acquired by encoding a coefficient sequence of a final block of an output MB line in byte units. Variable length encoding processing other than this is the same as normal processing with H.264, and so detailed description will be omitted. In this way it is possible to generate a bit stream that has been subjected to variable length encoding.

### (Step SB-6-1 in Fig. 6)

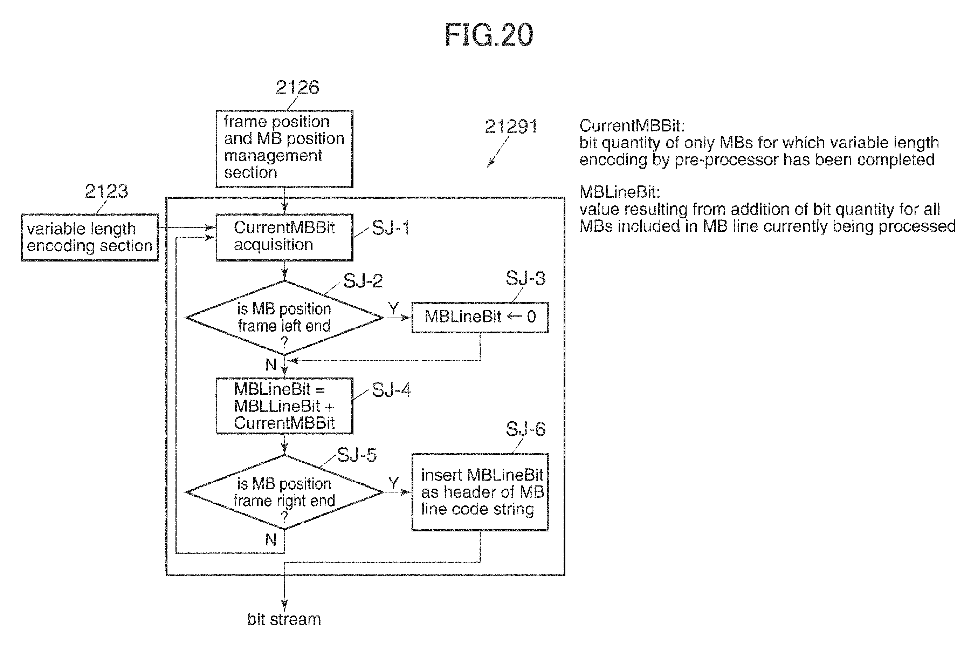

Next, a sequence of operations for insertion of MB line code amount by the MB line code amount insertion section 21291 will be described with further reference to Fig. 20.

### (Step SJ-1 in Fig. 20)

First, a bit amount for an MB that has been processed by the variable length encoding section 2123 (hereafter called CurrentMBBit) is acquired.

### (Steps SJ-2 to 4 in Fig. 20)

Next, if the position of the MB is the left end of the frame, a bit amount (MBLinebit) for all MBs included in the MB line that is the subject of processing is set to 0. If this is not the case, CurrentMBBit is added to the MBLinebit up to now to give a new MBLinebit.

### (Steps SJ-5 to 6 in Fig. 20)

If the position of the MB which is the subject of processing reaches the right and of a frame, the MBLinebit that has been acquired by combination so far is inserted into the header of MB line code string to give a bit stream. Until the right end is reached, the processing of previously described step SJ-1 is repeated each time a new MB is acquired.

### (Steps SB-7 to 9 in Fig. 6)

Next, an encoded bit stream is subjected to inverse transform for prediction, and stored in the frame memory. These processes may be the same as the routine processing with H.264, and so detailed description will be omitted. Next, the processing sequence returns to step SB-1. After that if there are no MBs to be processed, processing is terminated.

### (Step SA-3 in Fig. 5)

Next, the tile stream encoding section 21 stores a bit stream that has been generated by the previously described sequence in the bit stream group storage section 22.

### (Step SA-4 in Fig. 5)

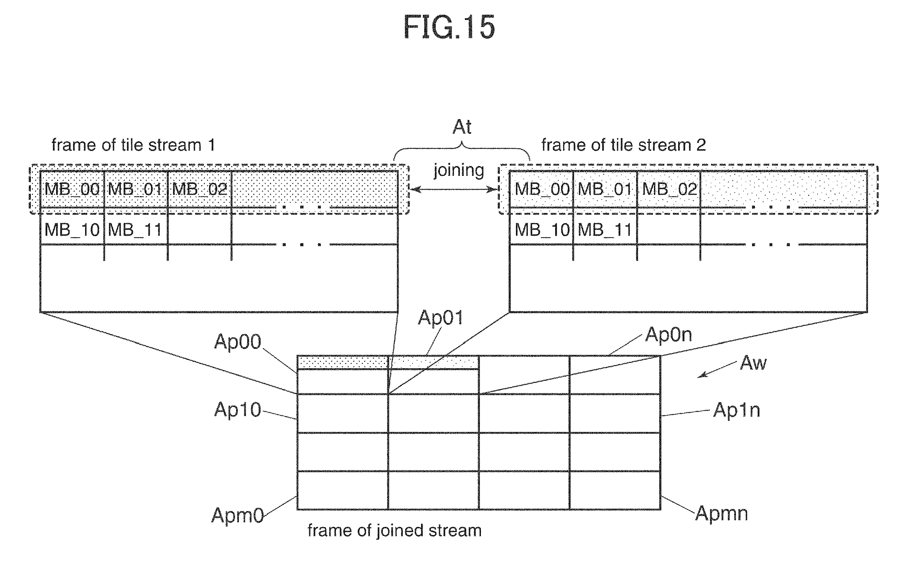

After that, the user designates a video region using the client terminal 3. Here, designation of a video region will be described with reference to Fig. 15. It is assumed that respective frames constituting the video are formed from frames (sometimes referred to as segmented regions) Ap00~Apmn of a tile stream. An entire video frame formed by frames Ap00~Apmn of a tile stream will be referred to as a frame of a joined stream or a whole region Aw.

Frames Ap00~Apmn of each tile stream are made up of groups of MBs represented by MB00~MBpq. These arrangements are the same as those described in nonpatent literature 3 and patent literature 1 by the present inventors, and so detailed description is emitted.

The user designates a region they wish to view using the client terminal 3. For example, with the example of Fig. 15, a video region represented by frame Ap00 and frame Ap01 of a tile stream has been designated. With this embodiment, connection is carried out in units of lines of an MB of a frame of a tile stream. Here, designation from the user is transmitted by means of the client status management server 24 to the joined stream generating section 23. The method by which the user designates the video region can be the same as that in previously described nonpatent literature 3 and patent literature 1 by the present inventors, and so more detailed description will be omitted. For example, with this embodiment connection is carried out in units of lines of an MB of a frame of a tile stream, but designation of a viewing region may be in a narrower range than this.

### (Step SA-5 in Fig. 5)

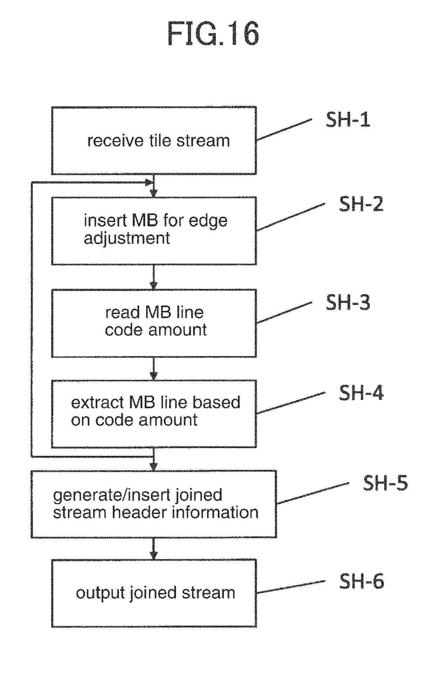

Next, the joined stream generating section 23 connects MB lines to generate a joined stream. A procedure for this joined stream generation will be described mainly with reference to Fig. 4 and Fig. 16.

### (Step SH-1 in Fig. 16)

A tile stream receiving section 231 of the joined stream generating section 23 receives a tile stream to be transmitted to the user (with this example a stream for AP00 and Asp01) from the bit stream group storage section 22 that stores groups of bit streams that have been subjected to encoding by the previously described sequence.

### (Step SH-2 in Fig. 16)

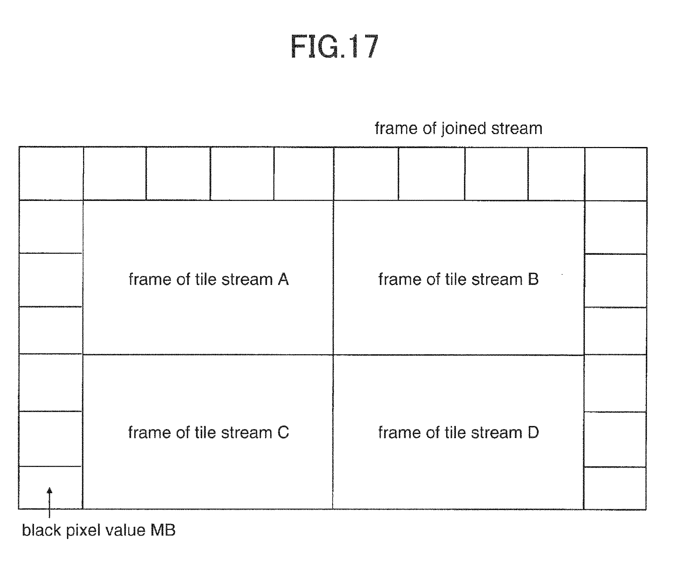

Next, the edge adjustment MB information insertion section 2321 of the joining processing section 232 inserts MB information for edge adjustment around frames of tile stream to be connected. A specific example is shown in Fig. 17. With this example, it is assumed that four frames of tile stream are to be connected. In this case, MB information for edge adjustment is asserted at the three edges of other than the lower edge. Here, MB information for edge adjustment is an MB for maintaining encoding consistency, and the data content and encoding method thereof are already known from the description of the joining processing section 232. Specifically, as described previously, for the encoding of frames of each tile stream, an algorithm is adopted that can appropriately decode even if prediction information, referenced at the time of encoding and at the time of connecting frames of respective tile streams, is different. The MBs for edge adjustment are inserted around the frame of the tile stream so as to conform to those encoding conditions.

With this embodiment, pixel values for edge adjustment MB are all black. It is also possible to adopt other pixel values however.

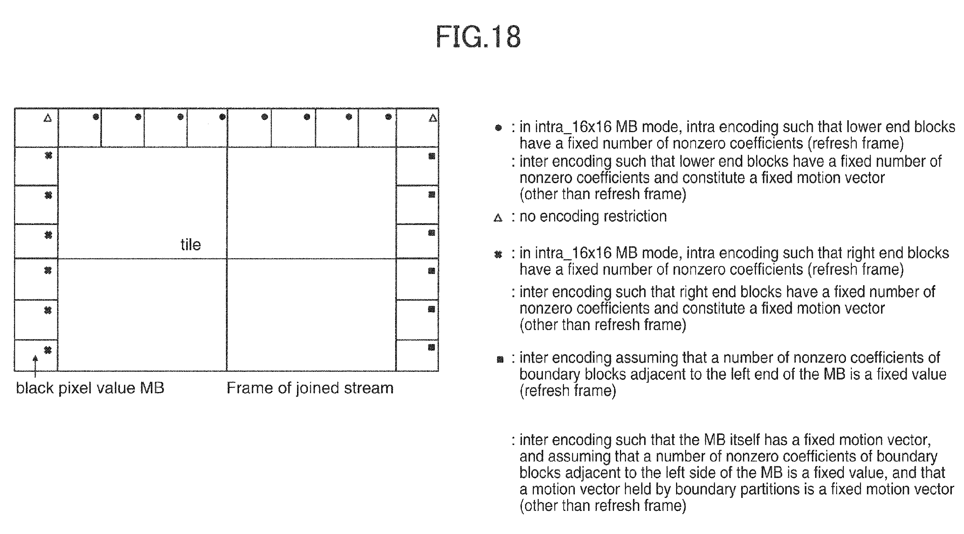

Also, specific encoding conditions for the edge adjustment MBs of this embodiment are shown in Fig. 18. As illustrated, the encoding conditions for the edge adjustment MBs are as follows.

•: intra-frame encoding (in the case of refresh frames) in intra_16x16 MB mode, and so that low end blocks have a fixed number of nonzero coefficients;
• : inter-frame encoding (in the case of other than refresh frames) so that low-end blocks have a fixed number of nonzero coefficients and have a fixed motion vector;
Δ: No encoding restriction;
×: intra-frame encoding (in the case of refresh frames) in intra_16x16 MB mode, and such that right end blocks have a fixed number of nonzero coefficients;
×: interframe encoding (in the case of other than refresh frames) such that right end blocks have a fixed number of nonzero coefficients and have a fixed motion vector;
■: interframe encoding assuming that a number of nonzero coefficients of boundary blocks adjacent to the left side of the MB is a fixed value (in the case of refresh frames);
■: Interframe encoding such that the MB itself has a fixed motion vector, and assuming that a number of nonzero coefficients of boundary blocks adjacent to the left side of the MB is a fixed value, and that a motion vector held by boundary partitions is a fixed motion vector (in cases other than a refresh frame).

### (Steps SH-3 to 4 in Fig. 16)

Next, MB line code amount indicated in the header of the bit stream is read out, and an MB line is extracted based on this MB line code amount. In this way by writing MB line code amount to the header in advance, it is possible to search for end sections of the MB line without carrying out variable length decoding. This reduces the load on the system as well as being important to implementation.

### (Step SH-5 in Fig. 16)

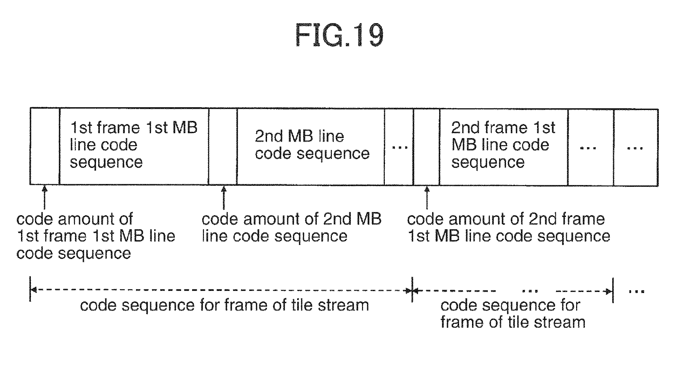

Next, header information for the joined stream is generated by the joined stream header information generation/insertion section 2324. The generated header information is inserted into an extracted MB line code string. A conceptual diagram of a joined stream with a header inserted is shown in Fig. 19. With this example, the structure is, from the head, SPS, PPS header, slice header, upper end (0th line) edge adjustment code string, first line left end MB code string, MB line code string for tile stream Ap00 to be connected (first line), MB line code string for tile stream Ap01 to be connected (first line), first line right end edge adjustment MB code string, second line left end edge adjustment MB code string, MB line code string for tile stream Ap00 to be connected (second line), MB line code string for tile stream Ap01 to be connected (second line), ... mth line left end edge adjustment MB code string, MB line code string for tile stream Ap00 to be connected (mth line), MB line code string for tile stream Ap01 to be connected (mth line), mth line right end edge adjustment MB code string.

The SPS, PPS header and slice header can take the same structure as the related art, and so detailed description will be omitted.

### (Step SH-6 in Fig. 16)

Next, the generated joined stream is transmitted from the joined stream output section 233 to the joined stream transmission section 25.

With the above-described processing, the encoding method of this embodiment performs encoding of a video tile stream, so as to make it possible to form a single joined stream by arbitrarily connecting each MB line of a plurality of video tile streams in units of each MB line. This method comprises
(1) a step of receiving a video signal constituting an object of encoding,
(2) a step of generating a tile stream by encoding the video signal using appropriate prediction reference information, and
(3) a step of outputting the video tile stream that has been obtained by encoding.

Regarding encoding of the video information, use is made of a restricted prediction reference information method or a fixed prediction reference information method, so that errors caused by inconsistencies in prediction relationship of a signal do not arise even if streams, formed by each MB line of a frame of the video tile stream, are arbitrarily connected.

Also, a connection method of the present invention is a connection method for connecting MB lines forming a video tile stream that has been encoded by the encoding system of this embodiment described above. This method comprises
(1) a step of detecting end sections of the MB lines of the video tile stream, and acquiring streams corresponding to the MB lines; and
(2) a step of inserting MBs for edge adjustment at end sections of MB lines, so as to be adjacent to positions constituting edges of a frame of a joined stream in a state where the video tile streams have been connected.

Here, some edge adjustment MBs are encoded with the previously described encoding method, and a combined a video stream output section 25 is configured to output a joined stream that has been generated by the joining processing section 232.

Also, the data structure shown in Fig. 19 is one example of a data structure generated by combining streams that correspond to MB lines constituting a tile stream that has been encoded by the previously described encoding system. With this data structure, MBs for edge adjustment are inserted at end sections of the MB lines, so as to be adjacent to positions constituting edges of frames of a joined stream in a state where the video tile streams have been connected. Further, at least some of the MBs for edge adjustment are encoded by the previously described encoding system.

### (Step SA-6 in Fig. 5)

The joined stream transmission section 25 transmits the joined stream to the client terminal 3 via the network 4.

With the client terminal 3 it is possible to decode a joined stream and display an image. This decoding processing can be the same as normal H.264, and so detailed description will be omitted.

A stream that has been combined with the method of this embodiment can be correctly decoded using a decoder that has been implemented using ordinary H.264. It is also possible to provide decoded image data to a user by displaying on a client terminal 3. Specifically, according to the method of this embodiment, it is possible to prevent degradation in image quality displayed on the client terminal, even if tile streams have been arbitrarily connected. Further, with the method of this embodiment, it is possible to reduce the processing load at the server side since there is no need to decode to the pixel level to correct inconsistencies in prediction reference information.

Also, with the method of this embodiment, since, for MBs that are to be subjected to intra frame encoding, a prediction mode is restricted, prediction information that is referenced at the time of encoding and at the time of connecting frames of respective tile streams is the same, making normal decoding possible at the client.

By adopting the above-described encoding procedure, it is possible to avoid inconsistencies in prediction information that is determined at the time of encoding and written into streams, in situations where tile streams are joined. Therefore, according to this embodiment, there is the advantage that, for example, variable length decoding of code required in order to avoid inconsistencies in prediction information, recalculation of decoded information, and processing to re-encode the recalculated result, are unnecessary. Also, by writing MB line code amount to a header in advance, it is possible to omit decoding processing such as variable length decoding in order to detect endpoints of the MB lines. Therefore, according to this embodiment, it is possible to realize combination of a plurality of tile streams at high speed.

The present invention is not limited to the above-described embodiments, and various modifications can additionally be obtained within a scope that does not depart from the spirit of the invention.

For example, each of the above-described structural elements can exist as a functional block, and may or may not exist as independent hardware. Also, as a method of implementation, it is possible to use hardware or to use computer software. Further, a single functional element of the present invention may be realized as a set of a plurality of functional elements, and a plurality of functional elements of the present invention may be implemented by a single functional element.

It is also possible for each functional element constituting the present invention to exist separately. In the case of existing separately, necessary data can be exchanged by means of a network, for example. Similarly, it is also possible for each function of an internal part of each section to exist separately. For example, it is possible to implement each functional element, or some of the functional elements, of this embodiment using grid computing or cloud computing.

## Claims

1. An encoding system for performing encoding of a video tile stream, so as to make it possible to form a single joined stream by arbitrarily connecting each MB line of a plurality of video tile streams in units of each MB line, comprising
a video signal receiving section, an encoding processing section and a video tile stream output section, wherein
the video signal receiving section receives image signals constituting an object of encoding,
the encoding processing section is configured to generate a video tile stream by encoding the video signal using appropriate prediction reference information,
and the encoding processing section is configured to use a restricted prediction reference information method or a fixed prediction reference information method, in the encoding, so that errors caused by inconsistencies in prediction relationship of a signal do not arise even if each MB line of the video tile stream is arbitrarily connected, and
the stream output section is configured to output the video tile stream that has been obtained by encoding in the encoding processing section.

2. The encoding system of claim 1, wherein the restricted prediction reference information method is a prediction method that restricts encoding information so that between MB lines of different video tile streams there are no dependencies on combinations of encoding information held by respectively adjacent MBs.

3. The encoding system of claim 1, wherein the restricted prediction reference information method comprises the following processing:
(1) processing to encode a frame forming the video signal using either of two encoding mode, namely intra-frame predicted encoding or inter-frame predicted encoding; and
(2) processing for, in a plurality of MBs in frames that have been subjected to intra-frame encoding, performing encoding using a prediction mode that references pixel values that do not rely on content of respectively adjacent MBs, between MB lines of different video tile streams.

4. The encoding system of claim 1, wherein the fixed prediction reference information method is a method that uses prediction information that has been fixed to predetermined values.

5. The encoding system of claim 1, wherein the fixed prediction reference information method performs the following processing:
(1) processing, for at least some MBs, among those that are MBs constituting the video tile stream, and that are positioned at edge portions of the frame of the video tile stream, to encode with the number of non-zero coefficients in brightness coefficient sequences and color difference coefficient sequences set to a predetermined fixed value; and
(2) processing for, in the case of MBs that reference the number of the non-zero coefficients of MBs that will be adjacent to edge portions of a frame of the video tile stream, encoding under the assumption that adjacent MBs exist that have the number of non-zero coefficients that is the fixed value.

6. The encoding system of claim 1, wherein the fixed prediction reference information method comprises the following processing:
(1) processing to carry out inter frame predicted encoding, for at least some MBs among MBs that are positioned at edge portions of a frame of a video tile stream, with motion vectors held by the MBs fixed to given motion vectors;
(2) processing for, in the case of MBs that reference motion vectors of MBs that will be adjacent to edge portions of a frame of the video tile stream, carrying out inter frame predicted encoding on the assumption that adjacent MBs exist having the given motion vector.

7. The encoding system of any one of claims 1 - 6, wherein the encoding processing section comprises an MB line code amount insertion section, and the MB line code amount insertion section is configured to generate additional information for defining position of the MB line within the video tile stream at the time of the encoding.

8. A connection system, for connecting MB lines constituting a video tile stream that has been encoded using the system of any one of claims 1 - 6, wherein
the connection system comprises the video tile stream receiving section, a joining processing section and a joined stream output section,
the video tile stream receiving section is configured to receive the video tile stream,
the joining processing section is configured to generate a joined stream by carrying out the following processing:
(1) processing to detect end sections of the MB lines of the video tile stream, and acquire stream corresponding to the MB lines;
(2) processing to insert MBs for edge adjustment at end sections of the MB line, so as to be adjacent to positions constituting edges of a frame of a joined stream in a state where the video tile stream has been connected, wherein some of the MBs for edge adjustment have been encoded by the encoding system of any one of claims 1 - 7; and
the joined stream output section is configured to output the joined stream that has been generated by the joining processing section.

9. An encoding method for performing encoding of a video tile stream, so as to make it possible to form a single joined stream by arbitrarily connecting each MB line of a plurality of video tile streams in units of each MB line, comprising:
(1) a step of receiving a video signal constituting an object of encoding,
(2) a step of generating a tile stream by encoding the video signal using appropriate prediction reference information, and
(3) a step of outputting the video tile stream that has been obtained by encoding, wherein
the encoding of the video information is configured to use a restricted prediction reference information method or a fixed prediction reference information method, so that errors caused by inconsistencies in prediction relationship of a signal do not arise even if streams, formed by each MB line of a frame of the video tile stream, are arbitrarily connected.

10. A computer program for causing execution of each of the steps in claim 9 on a computer.

11. A data structure generated by connecting streams corresponding to MB lines that constitute a tile stream that has been encoded by the system of any one of claims 1 - 7, wherein
MBs for edge adjustment are inserted at end sections of the MB lines, so as to be adjacent to positions constituting edges of a frame of a joined stream in a state where the video tile stream has been connected, and
at least some of the MBs for edge adjustment have been encoded by the encoding system of claims 1 - 7.
